# EUROPÄISCHE PATENTSCHRIFT

(11) **EP 1 053 274 B1**
(45) Veröffentlichungstag und Bekanntmachung des Hinweises auf die Patenterteilung: **10.09.2003**
(21) Anmeldenummer: 99907474.3
(22) Anmeldetag: 02.02.1999
(51) Int. Cl.: C08G 69/04, C08G 69/16, C08G 69/18, C08G 69/08

(54) **VERFAHREN ZUR HERSTELLUNG VON POLYAMIDEN AUS AMINONITRILEN**
METHOD FOR PRODUCING POLYAMIDES FROM AMINONITRILES
PROCEDE POUR LA PREPARATION DE POLYAMIDES A PARTIR D'AMINONITRILES

(30) Priorität: 02.02.1998 DE 19804020
(43) Veröffentlichungstag der Anmeldung: 22.11.2000
(73) Patentinhaber: BASF AKTIENGESELLSCHAFT, 67056 Ludwigshafen (DE)
(72) Erfinder: MOHRSCHLADT, Ralf, D-68723 Schwetzingen (DE)
(74) Vertreter: Isenbruck, Günter, Dr.
(86) Internationale Anmeldenummer: EP9900653
(87) Internationale Veröffentlichungsnummer: WO99038907

(56) Entgegenhaltungen:
- EP-A- 0 702 047

## Beschreibung

Die vorliegende Erfindung betrifft ein Verfahren zur Herstellung von Polyamiden aus Aminonitrilen und wäßrigen Medien bei erhöhter Temperatur und erhöhtem Druck.

Die Erfindung betrifft weiterhin die Verwendung von wäßrigen Monomer- und Oligomer-Extrakten, die bei der Herstellung von Polyamiden während der Extraktion des Polymerisats mit Wasser anfallen.

Die bei der Herstellung von Polyamiden durch Polymerisation von beispielsweise å-Caprolactam enstehenden Polymere enthalten niedermolekulare Anteile, die aus Caprolactam und Oligomeren davon bestehen. In der Praxis werden diese niedermolekularen Anteile durch Extraktion mit heißem Wasser entfernt. Aus diesen Extraktionswässern (wäßrigen Monomer- und Oligomer-Extrakten) kann man den Caprolactam-Anteil zurückgewinnen, reinigen und gegebenenfalls wieder in die Polymerisation einführen. Es ist auch möglich, durch Zusatz von spaltenden Reagenzien die in den Extraktwässern enthaltenen Oligomere zu Caprolactam umzusetzen, dieses gleichfalls zu isolieren, zu reinigen und wieder zu verwenden.

In der DE-A-25 01 348 ist ein Verfahren zur Herstellung von Polyamiden aus å-Caprolactam beschrieben, wobei man nach der Polymerisation mit einem Lösungsmittel extrahiert. Der Monomere und Oligomere enthaltende Extrakt wird unter Ausschluß von Luftsauerstoff aufkonzentriert, wobei die extraktberührenden Oberflächen in Werkstoffen ausgeführt sind, die sich unter den Bedingungen der Aufkonzentrierung inert verhalten. Das erhaltene Konzentrat wird ohne weitere Reinigung oder Auftrennung allein oder gemeinsam mit anderen polyamidbildenden Ausgangsstoffen polymerisiert.

In der US 3,459,640 ist ein Verfahren zur Rückgewinnung von gereinigtem Caprolactam aus Polycaproamid-Extraktionslösungen beschrieben. Dabei wird das rohe Caprolactam durch einen Wärmetauscher und anschließend in eine Trennvorrichtung geführt, in der gereinigtes Caprolactam unter vermindertem Druck abdestilliert wird. Das Caprolactam kann in die Umsetzung zurückgeführt werden.

In der US 5,077,381 ist ein Verfahren zur Herstellung von Polyamiden aus Amidmonomeren beschrieben, wobei nicht umgesetzte Amidmonomere und -oligomere extrahiert werden, im Extrakt durch Wärmebehandlung bei 220 bis 290°C der relative Anteil an Oligomeren vermindert wird und der extrahierte Teil des Reaktionsgemisches in die Umsetzung zurückgeführt wird.

In der EP-A-0 608 454 werden Polyamid-6-Abfälle oder oligomerenhaltige Polyamid-6-Abfälle oder oligomere Lactamrückstände durch Hydrolyse in einem Druckreaktor unter Beifügung von Wasser depolymerisiert und wieder aufbereitet.

Sämtliche der genannten Verfahren haben den Nachteil, das eine z. T. mehrstufige Aufarbeitung des Extrakrwassers folgen muß, bevor der gesamte Extrakt oder Extraktbestandteile, insbesondere Caprolactam, zur erneuten Polymerisation eingesetzt werden können. Die Verfahren, die eine Abtrennung, Aufarbeitung und Recyclierung von Caprolactam vorschlagen, weisen zudem den Nachteil auf, daß die in den Extraktwässern enthaltenen Oligomere nicht aufgearbeitet werden, sondern entsorgt werden müssen. Des weiteren wird in den genannten Verfahren zur Wiederverwertung von Extraktwasser der Einsatz einer Verfahrensstufe zur hydrolytischen Polymerisation des Extraktwasserkonzentrats oder einer Mischung aus Extraktwasserbestandteilen und Caprolactam vorausgesetzt.

EP-A-0 702 047 betrifft hochmolekulare Polyamide aus Nitrilen. Dabei werden die Monomere zunächst zu niedermolekularen Polyamiden polymerisiert und danach zu hochmolekularen Polyamiden nachkondensiert. Der Einsatz wässriger Monomer- und Oligomerextrakte für die direkte Umsetzung mit Aminonitrilen wird nicht erwähnt.

Aufgabe der vorliegenden Erfindung ist die Bereitstellung eines Verfahrens zur Recyclierung von Extraktwasser, d. h. wäßrigen Monomer- und Oligomer-Extrakten, die bei der Herstellung von Polyamiden während der Extraktion des Polymerisats mit Wasser anfallen, bei dem die wäßrigen Extraktlösungen möglichst direkt ohne vorherige Aufarbeitung, Aufkonzentrierung oder Abtrennungsschritte bei der Polymerisation eingesetzt werden können. Das Verfahren soll zudem die Nachteile der bekannten Verfahren vermeiden.

Die Aufgabe wird erfindungsgemäß gelöst durch Verwendung von wäßrigen Monomer- und Oligomer-Extrakten, die bei der Herstellung von Polyamiden während der Extraktion des Polymerisats mit Wasser anfallen, zur Herstellung von Polyamiden durch direkte Umsetzung mit Aminonitrilen.

Die Erfindung betrifft auch ein Verfahren zur Herstellung von Polyamiden durch Umsetzung mindestestens eines Aminonitrils mit wäßrigen Monomer- und Oligomer-Extrakten, die bei der Herstellung von Polyamiden während der Extraktion des Polymerisats mit Wasser anfallen.

Dabei werden die wäßrigen Monomer- und Oligomer-Extrakte ohne weitere Aufarbeitungsschritte in die Polymerisation zurückgeführt. Damit ist keine Aufkonzentrierung, Auftrennung oder Reinigung notwendig.

Das erfindungsgemäße Verfahren zur Wiederverwertung der wäßrigen Extrakte kann diskontinuierlich oder kontinuierlich durchgeführt werden.

Bevorzugt wird ein Reaktionsgemisch bestehend aus wäßrigen Monomer- und Oligomer-Extrakten, Aminonitril und Wasser in einem mehrphasigen Herstellungsprozeß zu Polyamid umgesetzt. Die Zusammensetzung des Reaktionsgemisches hängt vom Extraktgehalt des wäßrigen Extraktes ab. Erfindungsgemäß beträgt der Wassergehalt der Reaktionsmischung 10 bis 80 Gew.-%, bevorzugt 25 bis 60 Gew.-%.

Erfindungsgemäß bevorzugt ist ein Verfahren zur Herstellung eines Polyamids durch Umsetzung mindestens eines Aminonitrils mit Wasser, das die folgenden Stufen umfaßt:
(1) Umsetzung mindestens eines Aminonitrils mit einem wäßrigen Medium bei einer Temperatur von 90 bis 400°C und einem Druck von 0,1 bis 35 x 10⁶ Pa, wobei ein Umsetzungsgemisch erhalten wird,
(2) weitere Umsetzung des Umsetzungsgemischs bei einer Termperatur von 150 bis 400°C und einem Druck, der niedriger ist als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die ein wäßriges Medium enthält, bei einer Temperatur von 90 bis 370°C und einem Druck von 0,1 bis 30 x 10⁶ Pa, wobei ein Produktgemisch erhalten wird, wobei in Stufe 1 und/oder 3 als wäßriges Medium wäßrige Monomer- und Oligomer-Extrakte, die bei der Herstellung von Polyamiden bei der Extraktion des Polymerisats mit Wasser anfallen, und sonst Wasser eingesetzt werden.

Dabei kann das Verfahren zusätzlich oder an Stelle der Stufe 3 die folgende Stufe umfassen:
(4) Nachkondensation des Produktgemischs bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

Somit können die wäßrigen Monomer- und Oligomer-Extrakte in Stufe 1, Stufe 3 oder in beide Stufen des Verfahrens zurückgeführt werden. Wird nicht mit dem wäßrigen Extrakt gearbeitet, so kann stattdessen Wasser zugesetzt werden.

Als Aminonitril können im Gemisch prinzipiell alle Aminonitrile, d.h. Verbindungen, die sowohl mindestens eine Amino- als auch mindestens eine Nitrilgruppe aufweisen, eingesetzt werden. Unter diesen sind ω-Aminonitrile bevorzugt, wobei unter letzteren insbesondere ω-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe eine Alkylengruppe mit mindestens einem C-Atom aufweisen. Unter den Aminoalkylarylnitrilen sind insbesondere solche bevorzugt, die die Amino- und Nitrilgruppe in 1,4-Stellung zueinander aufweisen.
Als ω -Aminoalkylnitril setzt man weiter bevorzugt lineare ω -Aminoalkylnitrile ein, wobei der Alkylenrest (-CH₂-) vorzugsweise 4 bis 12 C-Atome, weiter bevorzugt von 4 bis 9 C-Atome enthält, wie 6-Amino-1-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril.

6-Aminocapronitril erhält man üblicherweise durch Hydrierung von Adipodinitril nach bekannten Verfahren, beispielsweise beschrieben in DE-A 836,938, DE-A 848,654 oder US 5 151 543.

Selbstverständlich können auch Gemische mehrer Aminonitrile oder Gemische eines Aminonitrils mit weiteren Comonomeren, wie Caprolactam oder das untenstehend näher definierte Gemisch eingesetzt werden.

In einer besonderen Ausführungsform, insbesondere wenn man Copolyamide oder verzweigte oder kettenverlängerte Polyamide herstellen möchte, setzt man anstelle von reinem 6-Aminocapronitril folgendes Gemisch ein:
50 bis 99,99, bevorzugt 80 bis 90 Gew.-% 6-Aminocapronitril,
0,01 bis 50, bevorzugt von 1 bis 30 Gew.-% mindestens einer Dicarbonsäure, ausgewählt aus der Gruppe bestehend aus aliphatischen C₄-C₁₀-α, ω-Dicarbonsäuren, aromatischen C₈-C₁₂-Dicarbonsäuren und Cs-Cs-Cycloalkandicarbonsäuren,
0 bis 50 bevorzugt 0,1 bis 30 Gew.-% eines -Diamins mit 4 bis 10 Kohlenstoffatomen,
0 bis 50 bevorzugt 0 bis 30 Gew.-% eines α, ω-C₂-C₁₂-Dinitrils sowie
0 bis 50 bevorzugt 0 bis 30 Gew.-% eines α, ω-C₅-C₁₂-Aminosäure oder des entsprechenden Lactams,
0 bis 10 Gew.-% mindestens einer anorganischen Säure oder deren Salz,
wobei die Summe der einzelnen Gewichtsprozentangaben 100 % beträgt.

Als Dicarbonsäuren kann man aliphatische C₄-C₁₀-α, ω-Dicarbonsäuren, wie Bernsteinsäure, Glutarsäure, Adipinsäure, Pimelinsäure, Korksäure, Azelainsäure, Sebazinsäure, bevorzugt Adipinsäure und Sebazinsäure, besonders bevorzugt Adipinsäure, und aromatische C₈-C₁₂-Dicarbonsäuren wie Terephthalsäure sowie C₅-C₈-Cycloalkandicarbonsäuren wie Cyclohexandicarbonsäure einsetzen.

Als α, ω-Diamin mit 4 bis 10 Kohlenstoffatomen kann man Tetramethylendiamin, Pentamethylendiamin, Hexamethylendiamin, Heptamethylendiamin, Octamethylendiamin, Nonamethylendiamin und Decamethylendiamin, bevorzugt Hexamethylendiamin, einsetzen.

Des weiteren ist es auch möglich, Salze aus den genannten Dicarbonsäuren und Diaminen einzusetzen, insbesondere das Salz aus Adipinsäure und Hexamethylendiamin, sogenanntes AH-Salz.

Als α, ω-C₂-C₁₂-Dinitril setzt man bevorzugt aliphatische Dinitrile, wie 1,4-Dicyanbutan (Adipodinitril), 1,5-Dicyanpentan, 1,6-Dicyanhexan, 1,7-Dicyanheptan, 1,8-Dicyanoctan, 1,9-Dicyannonan, 1,10-Dicyandecan, besonders bevorzugt Adipodinitril, ein.

Gewünschtenfalls kann man auch Diamine, Dinitrile und Aminonitrile, die sich von verzweigten Alkylen- oder Arylen- oder Alkylarylenen ableiten, verwenden.

Als α, ω -C₅-C₁₂-Aminosäure kann man 5-Aminopentansäure, 6-Aminohexansäure, 7-Aminoheptansäure, 8-Aminooctansäure, 9-Aminononansäure, 10-Aminodecansäure, 11-Aminoundecansäure und 12-Aminododecansäure, bevorzugt 6-Aminohexansäure, einsetzen.

Die Umsetzung in der ersten Stufe kann ohne Katalysator oder in Anwesenheit eines Metalloxid-Katalysators durchgeführt werden. Nachstehend sind die Umsetzungsbedingungen ohne Katalysator und mit Katalysator (in Klammern) angegeben.

Erfindungsgemäß wird in einer ersten Stufe (Stufe 1) ein Aminonitril mit Wasser, bei einer Temperatur von ungefähr 100 (90) bis ungefähr 400 (400)°C, vorzugsweise ungefähr 200 (180) bis ungefähr 350 (310)°C und insbesondere bei ungefähr 240 (220) bis ungefähr 290 (270)°C erhitzt, wobei ein Druck von ungefähr 0,1 bis ungefähr 35 (15) x 10⁶ Pa, vorzugsweise ungefähr 1 (1) bis ungefähr 15 (10) x 10⁶ Pa und insbesondere ungefähr 4 (4) bis ungefähr 11 (9) x 10⁶ Pa eingestellt wird. Dabei können in dieser Stufe Druck und Temperatur so aufeinander abgestimmt werden, daß eine flüssige oder eine feste Phase und ein Gemisch aus flüssiger oder fester Phase und eine gasförmige Phase erhalten werden. Vorzugsweise soll das Reaktionsgemisch einphasig flüssig vorliegen.

Erfindungsgemäß setzt man Wasser oder Extrakt in einem Molverhältnis von Aminoalkylnitril zu Wasser im Bereich von 1:1 bis 1:30 (1:10), besonders bevorzugt von 1:2 bis 1:10 (1:8), ganz besonders bevorzugt von 1:2 bis 1:8 (1:6), ein, wobei der Einsatz von Wasser oder Extrakt im Überschuß, bezogen auf das eingesetzte Aminoalkylnitril, bevorzugt ist.

Bei dieser Ausführungsform entspricht die flüssige oder feste Phase oder das Gemisch aus flüssiger und fester Phase dem Umsetzungsgemisch, während die gasförmige Phase abgetrennt wird. Dabei kann im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch kann zweiphasig flüssig-gasförmig, fest-gasförmig oder flüssig/fest-gasförmig vorliegen. Selbstverständlich können Druck und Temperatur auch so aufeinander abgestimmt werden, daß das Reaktionsgemisch einphasig-fest oder -flüssig vorliegt.

Die Abtrennung der Gasphase kann durch den Einsatz von gerührten oder nichtgerührten Abscheidekesseln oder Kesselkaskaden sowie durch den Einsatz von Verdampferapparaten erfolgen, z.B. durch Umlaufverdampfer oder Dünnschichtverdampfer, wie durch Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzfläche zu vergrößern. Des weiteren kann die Abtrennung der Gasphase durch die Zugabe von Wasserdampf oder Inertgas in die flüssige Phase gefördert werden.

Bevorzugt wird bei einer vorgewählten Temperatur der Druck so eingestellt, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

In Stufe 1 können Rührkessel, Strömungsrohre oder Kesselkaskaden eingesetzt werden. Bei einer zweiphasigen Fahrweise wird der Einsatz von Kesseln oder einer Reaktionskolonne bevorzugt, während bei einer einphasig-flüssigen Fahrweise als bevorzugte Ausführungsform ein Strömungsrohr, versehen mit Füllkörpern, einzusetzen ist. Der Einsatz eines Rohrbündelreaktors, wahlweise mit Füllkörpern ausgerüstet, in der ersten Verfahrensstufe ist ebenfalls möglich und insbesondere bei einer zweiphasigen Fahrweise vorteilhaft, um den Wärmeaustausch zu verbessern und die axiale Rückvermischung der Reaktanden weiter zu verringern.

Als Füllkörper können z.B. Raschig-Ringe oder Sulzer-Mischelemente verwendet werden, um eine schmale Verweilzeitverteilung zu gewährleisten und um die Rückvermischung zu begrenzen.

In einer weiteren Ausführungsform wird der Reaktor der ersten Stufe von oben nach unten durchströmt, wobei dieser wiederum bevorzugt mit Füllkörpern versehen ist, die eine axiale Rückvermischung der Reaktanden einschränken. Hierdurch erreicht das im Reaktor freiwerdende Ammoniak-Gas, welches vorwiegend direkt nach dem Eintritt in den Reaktor entsteht, auf kürzestem Weg die Gasphase am Kopf des Reaktors. Die Störung des Strömungsprofils im weiteren Verlauf des Reaktors durch aufsteigende Gasblasen bzw. Konvektion ist deshalb gering.

Bzgl. der Verweilzeit des Reaktionsgemischs in der ersten Stufe bestehen keinerlei Beschränkungen; sie wird jedoch im allgemeinen im Bereich von ungefähr 10 Minuten bis ungefähr 10 Stunden, vorzugsweise zwischen ungefähr 30 Minuten und ungefähr 6 Stunden gewählt.

Obwohl auch bzgl. des Umsatzes an Nitrilgruppen in Stufe 1 keinerlei Beschränkungen existieren, beträgt insbesondere aus wirtschaftlichen Gründen der Umsatz an Nitrilgruppen in Stufe 1 im allgemeinen nicht weniger als ungefähr 70 mol-%, vorzugsweise mindestens ungefähr 95 mol-% und insbesondere ungefähr 97 bis ungefähr 99 mol-%, jeweils bezogen auf die Molzahl an eingesetztem Aminonitril.

Den Umsatz an Nitrilgruppen ermittelt man üblicherweise mittels IR-Spektroskopie (CN-Valenz-Schwingung bei 2247 Wellenzahlen), NMR oder HPLC, bevorzugt durch IR-Spektroskopie.

In einer weiteren bevozugten Ausführungsform wird das Aminonitril/Wasser-Gemisch kontinuierlich mit Hilfe eines Wärmetauschers erhitzt, und das so erhitzte Gemisch in ein auf die gleiche Temperatur temperiertes Reaktionsgefäß, vorzugsweise ein Rohr, das ggf. Einbauten wie Sulzer-Mischelemente enthalten kann, um Rückvermischungen zu vermeiden, eingeführt. Selbstverständlich können das Aminonitril und das Wasser auch getrennt voneinander aufgeheizt werden. in Gegenwart von sauerstoffhaltigen Phosphorverbindungen, insbesondere Phosphorsäure, phosphoriger Säure und hypophosphoriger Säure sowie deren Alkalimetall- und Erdalkalimetallsalzen und Ammoniumsalzen wie Na₃PO₄, NaH₂PO₄, Na₂HPO₄, NaH₂PO₃, Na₂HPO₃, NaH₂PO₂, K₃PO₄, KH₂PO₄, K₂HPO₄, KH₂PO₃, K₂PO₃, KH₂PO₂ durchzuführen, wobei man das Molverhältnis von ω -Aminonitril zu Phosphorverbindungen im Bereich von 0,01:1 bis 1:1, bevorzugt von 0,01:1 bis 0,1:1 wählt.

Des weiteren ist es vorteilhaft, auch bekannte Metalloxide, wie Titandioxide, Zirkonoxid, Aluminiumoxid, Lanthanoxid, Magnesiuoxid, etc, bevorzugt einen Brönsted-Säurekatalysator, ausgewählt aus einem Beta- Zeolith-, Schichtsilikat- oder einem Titandioxid-Katalysator zur heterogenen Katalyse in den einzelnen verfahrensstufen einzusetzen, um den Umsatz, insbesondere der Nitrilgruppen zu fördern. Bevorzugt werden Titandioxide, insbesondere Titandioxide aus 70 bis 100 Gew.-% Anatas und 0 bis 30 Gew.-% Rutil, in dem bis zu 40 Gew.-% des Titandioxids durch Wolframoxid ersetzt sein können, eingesetzt. Für reine Ausgangsprodukte (Aminonitril) wird vorzugsweise ein Titandioxid mit hohem Gehalt an Anatas-Struktur eingesetzt. Bevorzugte Titanoxide bestehen zu 70 bis 100 Gew.-% aus Anatas und zu 0 bis 30 Gew.-% aus Rutil. Der Katalysator weist vorzugsweise ein Porenvolumen von 0,1 bis 5 ml/g, besonders bevorzugt 0,2 bis 0,5 ml/g auf. Der mittlere Porendurchmesser beträgt vorzugsweise 0,005 bis 0,1 µm, besonders bevorzugt 0,01 bis 0,06 µm. Wird mit hochviskosen Produkten gearbeitet, sollte er mittlere Porendurchmesser groß gewählt werden. Die Schneidhärte ist vorzugsweise größer 20 N, besonders bevorzugt > 25 N. Die BET-Oberfläche beträgt vorzugsweise mehr als 40 m²/g, besonders bevorzugt mehr als 100 m²/g. Bei einer kleiner gewählten BET-Oberfläche sollte das Schüttvolumen entsprechend höher gewählt werden, um eine ausreichende Katalysatoraktivität zu gewährleisten. Besonders bevorzugte Katalysatoren weisen folgende Eigenschaften auf: 100 % Anatas; 0,3 ml/g Porenvolumen; 0,02 µm mittlerer Porendurchmesser; 32 N Schneidhärte; 116 m²/g BET-Oberfläche oder 84 Gew.-% Anatas; 16 Gew.-% Rutil; 0,3 ml/g Porenvolumen; 0,03 µm mittlerer Porendurchmesser; 26 N Schneidhärte; 46 m²/g BET-Oberfläche. Die Katalysatoren können dabei aus handelsüblichen Pulvern, wie sie beispielsweise von Degussa, Finti können dabei aus handelsüblichen Pulvern, wie sie beispielsweise von Degussa, Finti oder Kemira angeboten werden, hergestellt werden. Beim Einsatz eines Anteils an Wolframoxid werden bis zu 40 Gew.-%, vorzugsweise bis zu 30 Gew.-%, besonders bevorzugt 15 bis 25 Gew.-% des Titandioxids durch Wolframoxid ersetzt. Die Konfektionierung der Katalysatoren kann wie in Ertl, Knözinger, Weitkamp: "Handbook of heterogeous catalysis", VCH Weinheim, 1997, Seiten 98ff beschrieben erfolgen. Die Metalloxide können in jeder beliebigen geeigneten Form gesetzt werden. Vorzugsweise werden sie in Form von Granulaten, Strängen oder Formkörpern eingesetzt. Besonders bevorzugt sind Granulate mit einem Durchmesser von 1 bis 10 mm und einer Länge von 1 bis 50 mm. Die Granulate können allein oder in Kombination mit metallischen Füllkörpern wie Raschig-Ringen eingesetzt werden. Dabei kann ein Gemisch aus Granulaten und metallischen Formkörpern vorliegen, oder es kann eine Schichtfolge von Metalloxid und metallischem Formkörper vorliegen. Dabei werden die oben genannten Metalloxide nicht in Stufe 4 eingesetzt, können jedoch in Stufen 1 bis 3, vorzugsweise 1 und 3 eingesetzt werden, wobei der Einsatz in Stufe 1 besonders bevorzugt ist.

Erfindungsgemäß wird das in der ersten Stufe erhaltene Umsetzungsgemisch in Stufe 2 bei einer Temperatur von ungefähr 150 (200) bis ungefähr 400 (350)°C, vorzugsweise einer Temperatur im Bereich von ungefähr 200 (210) bis ungefähr 330 (300)°C und insbesondere im Bereich von ungefähr 230 (230) bis ungefähr 290 (270)°C und einem Druck, der niedriger ist als der Druck in Stufe 1, weiter umgesetzt. Vorzugsweise ist der Druck in der zweiten Stufe mindestens ungefähr 0,5 x 10⁶ Pa niedriger als der Druck in Stufe 1, wobei im allgemeinen der Druck im Bereich von ungefähr 0,1 bis ungefähr 45 x 10⁶ Pa, vorzugsweise ungefähr 0,5 bis ungefähr 15 x 10⁶ Pa und insbesondere ungefähr 2 bis ungefähr 6 x 10⁶ Pa liegt.

Dabei werden in Stufe 2 die Temperatur und der Druck so gewählt, daß eine erste Gasphase und eine erste flüssige oder erste feste Phase oder ein Gemisch aus erster flüssiger und erster fester Phase erhalten werden, und die erste Gasphase von der ersten flüssigen oder ersten festen Phase oder dem Gemisch aus erster flüssiger und erster fester Phase abgetrennt wird.

Die erste gasförmige Phase, die im wesentlichen aus Ammoniak und Wasserdampf besteht, entfernt man im allgemeinen kontinuierlich mit Hilfe einer Destillationsvorrichtung, wie einer Destillationskolonne. Die bei dieser Destillation ggf. mitabgeschiedenen organischen Bestandteile des Destillats, im überwiegendem Maße nicht umgesetztes Aminonitril, können in Stufe 1 und/oder Stufe 2 vollständig oder teilweise zurückgeführt werden.

Die Verweilzeit des Umsetzungsgemisch in Stufe 2 unterliegt keinerlei Beschränkungen, beträgt jedoch im allgemeinen ungefähr 10 Minuten bis ungefähr 5 Stunden, vorzugsweise ungefähr 30 Minuten bis ungefähr 3 Stunden.

Die Produktleitung zwischen der ersten und zweiten Stufe enthält ggf. Füllkörper, wie Raschig-Ringe oder Sulzer-Mischelemente, die eine kontrollierte Entspannung des Umsetzungsgemischs in die Gasphase ermöglichen.

In Stufe 3 wird die erste flüssige oder die erste feste Phase oder das Gemisch aus erster flüssiger und erster fester Phase mit einer gasförmigen oder flüssigen Phase, die ein wäßriges Meidum enthält, vorzugsweise Wasser oder Wasserdampf oder Extrakt, versetzt. Vorzugsweise geschieht dies kontinuierlich. Die Menge an zugegebenem Wasser oder Extrakt (als Flüssigkeit) liegt vorzugsweise im Bereich von ungefähr 50 bis ungefähr 1500 ml, weiter bevorzugt ungefähr 100 bis ungefähr 500 ml, jeweils bezogen auf 1 kg der ersten flüssigen oder ersten festen Phase oder des Gemischs aus erster flüssiger und erster fester Phase. Durch diesen Wasser- oder Extraktzusatz werden in erster Linie die in der Stufe 2 verursachten Wasserverluste kompensiert und die Hydrolyse von Säureamidgruppen im Reaktionsgemisch gefördert. Daraus resultiert als weiterer Vorteil dieser Erfindung, daß das Gemisch der Ausgangsprodukte, wie es in Stufe 1 eingesetzt wird, lediglich mit einem kleinen Wasserüberschuß eingesetzt werden kann.

In einer anderen Ausführungsform der Erfindung können in der 3. Stufe wäßrige Extrakte mit höherem Extraktgehalt von bis zu 85% eingesetzt werden. In diesem Fall Verfahrensstufe so zu wählen, daß das Reaktionsgemisch einphasig-flüssig vorliegt, so daß die Bildung von organischen und anorganischen Abscheidungen bzw. Belägen an den Reaktorwänden und -füllkörpern vermieden wird. Gewünschtenfalls kann dem hochkonzentrierten wäßrigen Extrakt vor der Zuführung in die 3. Stufe Caprolactam zugesetzt werden, wodurch die Löslichkeit von Caprolactam-Oligomeren verbessert und die Ausscheidung von Oligomeren und somit die Verstopfung von Anlagenteilen verhindert wird.

Vorzugsweise wird die Wasser oder wäßrige Extrakte enthaltende gasförmige oder flüssige Phase vor der Einleitung in Stufe 3 in einem Wärmetauscher vorgeheizt und anschließend mit der ersten flüssigen oder der ersten festen Phase oder dem Gemisch aus erster fester und erster flüssiger Phase vermischt. Dabei können ggf. Mischelemente im Reaktor eingesetzt werden, die die Durchmischung der Komponenten fördern.

Stufe 3 kann bei einer Temperatur von 150 bis 370 °C und einem Druck von 0,1 bis 30 x 10⁶ Pa betrieben werden. Beim Vorliegen einer Katalysatorschüttung können die für Stufe 1 geltenden Bedingungen angewendet werden.

Dabei können Druck und Temperatur so aufeinander abgestimmt werden, daß das Reaktionsgemisch einphasig-flüsssig oder einphasig-fest vorliegt. In einer anderen Ausführungsform werden Druck und Temperatur so gewählt, daß eine flüssige oder eine feste Phase oder ein Gemisch aus fester und flüssiger Phase sowie eine gasförmige Phase erhalten werden. Bei dieser Ausführungsform entspricht die flüssige oder feste Phase oder das Gemisch aus flüssiger und fester Phase dem Produktgemisch, während die gasförmige Phase abgetrennt wird. Dabei kann im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch kann zweiphasig flüssig-gasförmig, fest-gasförmig oder flüssig/festgasförmig vorliegen.

Bei einer vorgewählten Temperatur kann der Druck so eingestellt werden, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

Die in dieser Stufe einsetzbaren Apparaturen/Reaktoren können mit denen der Stufe 1, wie oben diskutiert, identisch sein.

In einer bevorzugten Ausführungsform wird bei der zweiphasigen Fahrweise der Reaktor der ersten Stufe von oben nach unten durchströmt, wobei dieser wiederum bevorzugt mit Katalysator und/oder Füllkörpern versehen ist, die eine axiale Rückvermischung der Reaktanden einschränken. Hierdurch erreicht das im Reaktor freiwerdende Ammonik-Gas, welches vorwiegend direkt nach dem Eintritt in den Reaktor entsteht, auf kürzestem Weg die Gasphase am Kopf des Reaktors. Die Störung des Strömungsprofils im weiteren Verlauf des Reaktors durch aufsteigende Gasblasen bzw. Konvektion ist deshalb gering.

Die Verweilzeit in dieser Stufe unterliegt ebenfalls keinen Beschränkungen, aus wirtschaftlichen Gründen wählt man sie jedoch im allgemeinen im Bereich zwischen ungefähr 10 Minuten bis ungefähr 10 Stunden, vorzugsweise zwischen ungefähr 1 bis ungefähr 8 Stunden, besonders bevorzugt ungefähr 1 bis 6 Stunden.

Das in Stufe 3 erhaltene Produktgemisch kann dann, wie weiter unten beschrieben, weiterverarbeitet werden.

In einer bevorzugten Ausführungsform wird das Produktgemisch der Stufe 3 in einer vierten Stufe einer Nachkondensation bei einer Temperatur von ungefähr 200 bis ungefähr 350°C, vorzugsweise einer Temperatur von ungefähr 220 bis 300°C und insbesondere ungefähr 250 bis 270°C unterworfen. Stufe 4 wird bei einem Druck durchgeführt, der unterhalb des Drucks der Stufe 3 liegt, und vorzugsweise in einem Bereich von ungefähr 5 bis 1000 x 10³ Pa, weiter bevorzugt ungefähr 10 bis ungefähr 300 x 10³ Pa liegt. Im Rahmen dieser Stufe werden Temperatur und Druck so gewählt, daß eine zweite Gasphase und eine zweite flüssige oder feste Phase oder ein Gemisch aus zweiter flüssiger und zweiter fester Phase, die das Polyamid enthalten, erhalten werden.

Vorzugsweise wird die Nachkondensation gemäß Stufe 4 so durchgeführt, daß die relative Viskosität (gemessen bei einer Temperatur von 25°C und einer Konzentration von 1 g Polymer pro 100 ml in 96 Gew.-%iger Schwefelsäure) des Polyamids einen Wert im Bereich von ungefähr 1,6 bis ungefähr 3,5 einnimmt.

In einer bevorzugten Ausführungsform kann man aus der flüssigen Phase gegebenenfalls vorhandenes Wasser mittels eines Inertgases wie Stickstoff austreiben.

Die Verweilzeit des Reaktionsgemischs in Stufe 4 richtet sich insbesondere nach der gewünschten relativen Viskosität, der Temperatur, dem Druck und der in Stufe 3 zugesetzten Wassermenge.

Wird die Stufe 3 einphasig betrieben, so können in der Produktleitung zwischen der Stufe 3 und der Stufe 4 ggf. Füllkörper, bestehend z.B. aus Raschig-Ringen oder Sulzer-Mischelementen, eingesetzt werden, welche eine kontrollierte Entspannung des Reaktionsgemischs in der Gasphase ermöglichen

In einer weiteren Ausführungsform kann erfindungsgemäß auf Stufe 3 verzichtet werden und zur Herstellung des Polyamids die Stufen (1), (2) und (4) ausgeführt werden.

### Vorzugsweise wird diese Variante - ohne Katalysator - wie folgt durchgeführt:

In Stufe 1 wird mindestens ein Aminoalkylnitril mit einem Überschuß an Wasser und/oder Extraktwasser auf eine Temperatur im Bereich von ungefähr 250 bis ungefähr 350 °C und einem Druck von ungefähr 4 bis 30 x 10⁶ Pa erhitzt, wobei man Druck und Temperatur so aufeinander abstimmt, daß das Reaktionsgemisch einphasig flüssig vorliegt, und wobei der Umsatz an Nitrilgruppen nicht kleiner als 95 mol-%, bezogen auf die Mol-Zahl an eingesetztem Aminoalkylnitril, ist, wobei ein Umsetzungsgemisch erhalten wird.

Das Umsetzungsgemisch wird in Stufe 2 bei einer Temperatur im Bereich von ungefähr 220 bis ungefähr 300 °C und einem Druck im Bereich von ungefähr 1 bis ungefähr 7 x 10⁶ Pa behandelt, wobei der Druck in der zweiten Stufe mindestens 0,5 x 10⁶ Pa niedriger ist als in Stufe 1. Gleichzeitig wird die entstandene erste Gasphase von der ersten flüssigen Phase abgetrennt.

Die in Stufe 2 erhaltene erste flüssige Phase wird in Stufe 3 bei einer Temperatur im Bereich von ungefähr 220 bis 300 °C und einem Druck im Bereich von ungefähr 10 bis ungefähr 300 x 10³ Pa behandelt, wobei die dabei enstehende zweite, Wasser und Ammoniak enthaltende Gasphase von der zweiten flüssigen Phase abgetrennt wird. Innerhalb dieser Stufe wird die relative Viskosität (gemessen wie oben definiert) des erhaltenen Polyamids auf einen gewünschten Wert im Bereich von ungefähr 1,6 bis ungefähr 3,5 durch Wahl der Temperatur und der Verweilzeit eingestellt.

Anschließend wird die so erhaltene zweite flüssige Phase nach üblichen Methoden ausgetragen und, falls dies erwünscht ist, aufgearbeitet.

Beim Einsatz von Metalloxid-Katalysatoren können die vorstehend beschriebenen niedrigeren Temperaturen und Drücke angewendet werden.

Die oben beschriebenen Verfahren, d.h. die erfindungsgemäße Abfolge der Stufen (1) bis (3) oder (1), (2) und (4) oder (1) bis (4) kann entweder diskontinuierlich, d.h. in einem Reaktor zeitlich nacheinander, oder kontinuierlich, d.h. in aufeinanderfolgenden Reaktoren zur gleichen Zeit, durchgeführt werden. Selbstverständlich ist es auch möglich, einen Teil der Stufen, beispielsweise Stufen (1) und (2) kontinuierlich und die restliche(n) Stufe(n) diskontinuierlich auszuführen.

In einer weiteren bevorzugten Ausführungsform der vorliegenden Erfindung kann mindestens eine der in den jeweiligen Stufen erhaltenen Gasphasen in mindestens eine der vorhergehenden Stufen zurückgeführt werden.

Es ist weiterhin bevorzugt, daß in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten wird, und die gasförmige Phase abgetrennt wird.

Ferner kann man im Rahmen des erfindungsgemäßen Verfahrens auch eine Kettenverlängerung oder eine Verzweigung oder eine Kombination aus beidem durchführen. Dazu werden dem Fachmann bekannte Substanzen zur Verzweigung bzw. Kettenverlängerung von Polymeren in den einzelnen Stufen zugesetzt. Vorzugsweise werden diese Substanzen in Stufe 3 oder 4 zugesetzt.

### Als einsetzbare Substanzen sind zu nennen:

Trifünktionelle Amine oder Carbonsäuren als Verzweiger bzw. Vernetzer. Beispiele geeigneter mindestens trifunktioneller Amine oder Carbonsäuren sind beschrieben in der EP-A-0 345 648. Die mindestens trifunktionellen Amine weisen mindestens drei Aminogruppen auf, die zur Umsetzung mit Carbonsäuregruppen fähig sind. Sie weisen vorzugsweise keine Carbonsäuregruppen auf. Die mindestens trifunktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigten Aminogruppen auf Beispiele geeigneter Carbonsäuren sind Trimesinsäure, trimerisierte Fettsäuren, die beispielsweise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren definierte organische Verbindungen und keine polymeren Verbindungen.

Amine mit mindestens 3 Aminogruppen sind beispielsweise Nitrilotrialkylamin, insbesondere Nitrilotriethanamin, Dialkylentriamine, insbesondere Diethylentriamin, Trialkylentetramine und Tetraalkylenpentamine, wobei die Alkylenreste vorzugsweise Ethylenreste sind. Weiterhin können als Amine Dendrimere verwendet werden. Vorzugsweise weisen die Dendrimere die allgemeine Formel I auf

(R₂N-(CH₂)ₙ)₂N-(CH₂)ₓ-N((CH₂)ₙ-NR₂)₂ **(I)** (I)

in der
R H oder -(CH₂)ₙ-NR¹₂ mit
R¹ H oder -(CH₂)ₙ-NR²₂ mit
R² H oder -(CH₂)ₙ-NR³₂ mit
R³ H oder -(CH₂)ₙ-NH₂ ist,
n einen ganzzahligen Wert von 2 bis 6 hat und
x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest -(CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Porphyrin, Phthalocyanin, Naphthalocyanin. Bevorzugt sind 3,5,3',5'-Biphenyltetracarbonsäure-Phthalocyanin, Naphthalocyanin, 3,5,5',5'-Biphenyltetracarbonsäure, 1,3,5,7-Naphthalintetracarbonsäure, 2,4,6-Pyridintricarbonsäure, 3,5,3'5'-Bipyridyltetracarbonsäure, 3,5,3'5'-Benzophenontetracarbonsäure, 1,3,6,8-Akridintetracarbonsäure, besonders bevorzugt 1,3,5-Benzoltricarbonsäure (Trimesinsäure) und 1,2,4,5-Benzoltetracarbonsäure. Derartige Verbindungen sind technisch erhältlich oder können nach dem in der DE-A-43 12 182 beschriebenen Verfahren hergestellt werden. Bei der Verwendung von orthosubstituierten aromatischen Verbindungen wird vorzugsweise eine Imidbildung durch Wahl geeigneter Umsetzungstemperaturen verhindert.

Diese Substanzen sind mindestens trifunktionell, vorzugsweise mindestens tetrafunktionell. Dabei kann die Anzahl der funktionellen Gruppen 3 bis 16, vorzugsweise 4 bis 10, besondedrs bevorzugt 4 bis 8 betragen. Es werden in den erfindungsgemäßen Verfahren entweder mindestens trifunktionelle Amine oder mindestens trifunktionelle Carbonsäuren eingesetzt, jedoch keine Gemische aus entsprechenden Aminen oder Carbonsäuren. Geringe Mengen an mindestens trifunktionellen Aminen können jedoch in den trifunktionellen Carbonsäuren enthalten sein und umgekehrt.

Die Substanzen liegen in der Menge von 1 bis 50 µmol/g Polyamid, vorzugsweise 1 bis 35, besonders bevorzugt 1 bis 20 µmol/g Polyamid vor. Vorzugsweise sind die Substanzen in einer Menge von 3 bis 150, besonders bevorzugt 5 bis 100, insbesondere 10 bis 70 µmol/g Polyamid an Äquivalenten enthalten. Die Äquivalente beziehen sich dabei auf die Anzahl der funktionellen Aminogruppen oder Carbonsäuregruppen.

Difunktionelle Carbonsäuren oder difunktionelle Amine dienen als Kettenverlängerungsmittel. Sie weisen 2 Carbonsäuregruppen auf, die mit Aminogruppen umgesetzt werden können, oder 2 Aminogruppen, die mit Carbonsäuren umgesetzt werden können. Die difunktionellen Carbonsäuren oder Amine enthalten außer den Carbonsäuregruppen oder Aminogruppen keine weiteren funktionellen Gruppen, die mit Aminogruppen oder Carbonsäuregruppen reagieren können. Vorzugsweise enthalten sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin, Dicycycan, Laromin. Verzweigte aliphatische Diamine sind ebenfalls verwendbar, ein Beispiel ist Vestamin TMD (Trimethylhexamethylendiamin, hergestellt von der Hüls AG). Zudem können die Diamine aromatisch-aliphatisch sein, beispielsweise kann n-Xylylendiamin verwendet werden. Die gesamten Amine können jeweils durch C₁₋₁₂-, vorzugsweise C₁₋₁₄-Alkylreste am Kohlenstoffgerüst substituiert sein.

Difunktionelle Carbonsäuren sind beispielsweise solche, die mit difunkitionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsäure, Sebazinsäure, Suberinsäure. Sie können zudem aromatisch sein. Beispiele sind Isophthalsäure, Terephthalsäure, Naphthalindicarbonsäure, wie auch dimerisierte Fettsäuren.

Die difunktionellen Grundbausteine (c) werden vorzugsweise in Mengen von 1 bis 55, besonders bevorzugt 1 bis 30, insbesondere 1 bis 15 µm/g Polyamid eingesetzt.

Erfindungsgemäß trägt man das in Stufe 3 erhaltene Produktgemisch oder die zweite flüssige oder zweite feste Phase oder das Gemisch aus zweiter flüssiger und zweiter fester Phase (aus Stufe 4), die das Polyamid enthalten, vorzugsweise eine Polymerschmelze, nach üblichen Methoden, beispielsweise mit Hilfe einer Pumpe, aus dem Reaktionsgefäß aus. Anschließend kann man das erhaltene Polyamid nach an sich bekannten Mehtoden, wie sie z.B. in der DE-A 43 21 683 (S. 3, Z. 54 bis S. 4, Z.3) ausführlich beschrieben sind, aufarbeiten.

In einer bevorzugten Ausführungsform kann man den Gehalt an cyclischem Dimer im erfindungsgemäß erhaltenen Polyamid-6 an cyclischem Dimer weiter reduzieren, indem man das Polyamid zuerst mit einer wäßrigen Lösung von Caprolactam und anschließend mit Wasser extrahiert und/oder der Gasphasenextraktion (beispielsweise beschrieben in der EP-A-0 284 968) unterwirft. Die bei dieser Nachbehandlung anfallenden niedermolekularen Bestandteile wie Caprolactam und seine linearen sowie cyclischen Oligomere, kann man in die erste und/oder zweite und/oder dritte Stufe zurückführen.

Dem Ausgangsgemisch und dem Reaktionsgemisch können in allen Stufen Kettenregler, wie aliphatische und aromatische Carbon- und Dicarbonsäuren, und Katalysatoren, wie sauerstoffhaltige Phosphorverbindungen, in Mengen im Bereich von 0,01 bis 5 Gew.-%, bevorzugt von 0,2 bis 3 Gew.-%, bezogen auf die Menge an eingesetzten polyamidbildenden Monomeren und Aminonitrilen, zugesetzt werden. Geeignete Kettenregler sind zum Beispiel Propionsäure, Essigsäure, Benzoesäure, Terephthalsäure sowie Triacetondiamin.

Zusatz- und Füllstoffe wie Pigmente, Farbstoffe und Stabilisatoren werden in der Regel vor dem Granulieren, bevorzugt in der zweiten, dritten und vierten Stufe der Reaktionsmischung zugeführt. Besonders bevorzugt sind Füll- und Zusatzstoffe dann einzusetzen, wenn die Reaktions- bzw. Polymermischung im weiteren Verfahrensablauf nicht mehr in Gegenwart von Festbettkatalysatoren umgesetzt wird. Als Zusatzstoffe können die Zusammensetzungen von 0 bis 40 Gew.-%, bevorzugt von 1 bis 30 Gew.-%, bezogen auf die gesamte Zusammensetzung, eines oder mehrerer schlagzähmodifizierender Kautschuke enthalten.

Es können z.B. übliche Schlagzähmodifier verwendet werden, die für Polyamide und/oder Polyarylenether geeignet sind.

Kautschuke, die die Zähigkeit von Polyamiden erhöhen, weisen im allgemeinen zwei wesentliche Merkmale auf sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid wechselwirken kann. Geeignete funktionelle Gruppen sind beispielsweise Carbonsäure, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit der Blends erhöhen, seien z.B. folgende genannt:

EP- bzw. EPDM-Kautschuke, die mit den obigen funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomere können in der Schmelze oder in Lösung, gegebenenfalls in Gegenwart eines Radikalstartes wie Cumolhydroperoxid auf das Polymere aufgepropft werden.

Die unter den Polymeren A beschriebenen Copolymere von α-Olefinen, darunter insbesondere die Ethylencopolymere können anstelle als Polymere A auch als Kautschuke eingesetzt und den erfindungsgemäßen Zusammensetzungen als solche beigemischt werden.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit ã-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im allgemeinen von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kem-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Hamstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tert-Butyl(meth-)acrylat, Acrylsäure, Glycidyl(meth-)acrylat und Vinyloxazolin. Der Anteil an Monomeren mit funktionellen Gruppen beträgt im allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke, die die Zähigkeit von Polyamiden erhöhen, sind an sich bekannt und beispielsweise in der EP-A-0 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen bis zu 40, vorzugsweise bis zu 15 Gew.-%, bezogen auf das Gesamtgewicht der Zusammensetzung.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen wie Zinkoxid, Zinksulfid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnaceoder Gasruß eingesetzt wird (siehe hierzu G Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-halogeniden, z.B. Chloriden, Bromiden oder Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentration bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Die Erfindung wird nachstehend anhand von Beispielen näher erläutert.

### Beispiele

### Katalysatorherstellung

### Katalysator 1 Beta-Zeolith-Pulver

Als Katalysator wurde ein Beta-Zeolith von Uetikon (Zeokat-Beta) mit folgender Zusammensetzung eingesetzt: SiO₂=91%, Al₂O₃=7.8%, Na₂O=0.5%, K₂O =0.7%, BET-Oberfläche = 700 m²/g, Porengröße in Å = 7.6 x 6.7; 5.5 x 5.5, Teilchengröße 0.2-0.5 µm.

### Katalysator 2 Beta-Zeolith-Stränge

220 g β-Zeolith aus dem Beispiel 1 wurden mit 5 % Walocel® und 230 g Wasser 45 Minuten lang im Kneter verdichtet. Anschließend wurde die Masse mit 70 bar Preßdruck zu 2 mm Strängen verformt. Diese wurden bei 110°C getrocknet und bei 500°C 16 h lang calciniert.

195 g dieser Stränge wurden mit 3 Liter 20%iger NH₄Cl-Lösung bei 80°C 2 h lang ausgetauscht und anschließend mit 10 l Wasser gewaschen. Anschließend wurde ein zweiter Austausch mit ebenfalls 3 l 20%iger NH₄Cl-Lösung bei 80°C / 2 h vorgenommen und das Produkt Cl-frei gewaschen. Nach dem Trocknen bei 110°C wurde 5 h lang bei 500°C calciniert.

### Katalysator 3 Schichtsilikat Typ K10®

K10® ist ein säurebehandelter Montmorillonit von Süd-Chemie. Er hat eine BET-Oberfläche von 180-220 m²/g und ein Ionenaustauschäquivalent von 40-50 mVal/100 g.

### Katalysatoren 4 und 5 TiO₂-Stränge aus 100% bzw. 84% Anatas

Die Herstellung folgt der Beschreibung in Ertl, Knözinger, Weitkamp: "Handbook of heterogeous catalysis", VCH Weinheim, 1997; Seite 98ff. Die in der vorstehenden Beschreibung als besonders bevorzugt beschriebenen TiO₂-Modifikationen wurden mit Wasser, Silica-Sol und Glycerin vermischt, extrudiert und bei 550°C calciniert.

### Katalysator 6 Titandioxid-Wolframoxid-Katalysator

Der verwendete Katalysator wurde durch inniges Vermischen des handelsüblichen Titandioxids VKR 611 (von Sachtleben) mit Wolframoxid und anschließende Verstrangung gemäß Beispiel 2 oder 4 erhalten.

Er besitzt folgende Spezifilation: 20 Gew.-% WO₃, 80 Gew.-% TiO₂; BET-Oberfläche = 73 m²/g, Gesamtacidität (pKₛ=6,8) = 0,56 mmol/g; Gesamtacidität (pKₛ= -3) = 0,035 mmol/g.

Die sogenannte relative Viskosität (RV) als Maß für den Molekulargewichtsaufbau und Polymerisationsgrad wird in 1 Gew.-%iger Lösung bei extrahiertem Material und in 1.1 Gew.-%iger Lösung bei unextrahiertem Polymer in 96%iger Schwefelsäure bei 25°C mittels Viskometer nach Ubbelohde bestimmt. Unextrahierte Polymere werden vor der Analyse 20 Stunden im Vakuum getrocknet.

Die Bestimmung des Amino- und Carboxylendgruppengehalts (AEG bzw. CEG) erfolgt am extrahierten Polycaprolactam und wird als acidmetrische Titration durchgeführt. Die Aminogruppen werden in Phenol/Methanol 70:30 (Gew.-Teile) als Lösungsmittel mit Perchlorsäure titriert.

Zur Extraktion werden 100 Gew.-Teile Polycaprolactam mit 400 Gew.-Teilen vollentsalztem Wasser bei einer Temperatur von 100°C für eine Dauer von 32 Stunden unter Rückfluß gerührt bzw. extrahiert und nach Entfernen des Wassers milde, das heißt ohne Nachkondensation, bei einer Temperatur von 100°C für eine Zeitdauer von 20 Stunden im Vakuum getrocknet. Der Extraktgehalt (ExG) wird bezogen auf das Polycaprolactam angegeben.

### Beispiele 1, 2, V1, V2

Das Edukt-Gemisch, bestehend aus Aminocapronitril (Reinheit 99%) und Wasser oder Extraktwasser mit einem molaren Mischungsverhältnis (bezogen auf H₂O im Extraktwasser) von 1:6, wird durch einen Rohrreaktor (Länge 1000 mm; Innendurchmesser 36 mm) gepumpt, der gegebenenfalls TiO₂ -Stränge (Katalysator 4: Durchmesser 4 mm, Länge 5 - 10 mm) als Füllkörper enthält. Der Extraktgehalt des eingesetzten Extraktwassers beträgt in sämtlichen Versuchen zwischen 6 und 7 Gew.-%.

Das Reaktionsgemisch wird anschließend in einen Abscheidekessel (Volumen 2 l) auf einen Druck zwischen 30 und 60 bar entspannt. Eine Zahnradpumpe überführt das Reaktionsgemisch aus der zweiten Verfahrensstufe in einen weiteren Rohrreaktor (Länge 1000 mm; Innendurchmesser 36 mm) der dritten Verfahrensstufe, der Raschig-Ringe (6 mm Länge und 6 mm Durchmesser) als Füllkörper enthält. Dem Reaktionsgemisch wird am Eingang der Stufe 3 kontinuierlich Wasser oder Extraktwasser mit einem Volumenstrom von 0, 50 oder 100 ml/h zugesetzt. Das Reaktionsgemisch aus der dritten Stufe wird dann in eine vierte Stufe zur Nachkondensation überführt.

Die zu den Beispielversuchen korrespondierenden Verfahrensparameter sind in Tabelle 1 aufgelistet. Die tabellierten Beispiele verdeutlichen, daß der Einsatz des Extraktwassers im Eduktgemisch und in der dritten Verfahrensstufe die Viskosität des Polycaprolactams, dargestellt in Tabelle 2, nicht beeinflußt und die Produkteigenschaften nicht beeinträchtigt.

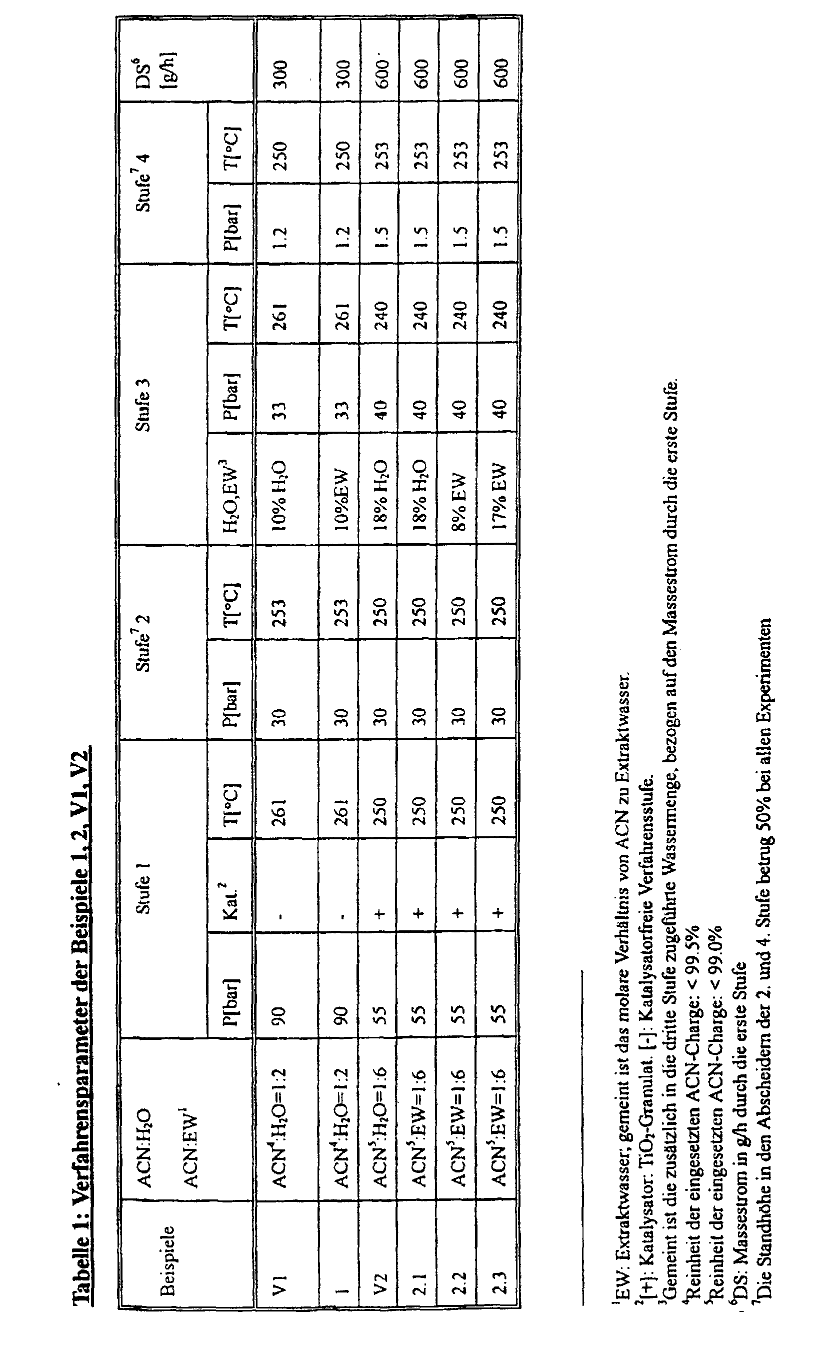

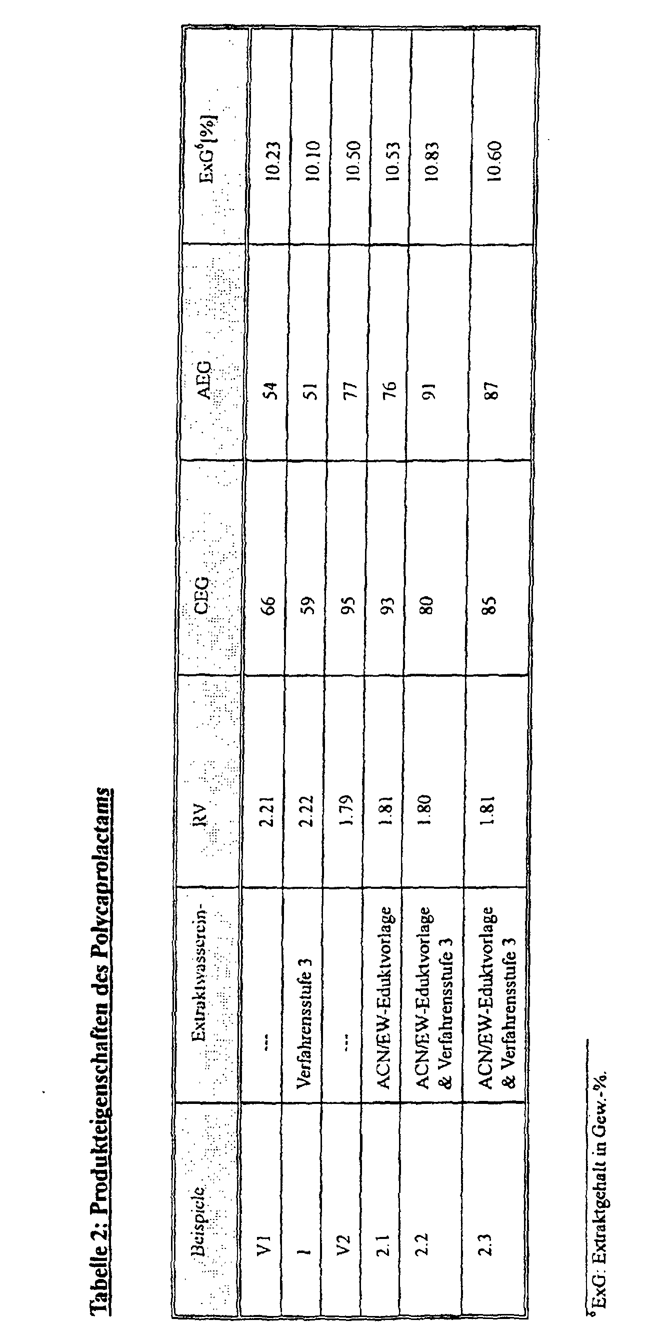

## Patentansprüche

1. Verwendung von wäßrigen Monomer- und Oligomer-Extrakten, die bei der Herstellung von Polyamiden während der Extraktion des Polymerisats mit Wasser anfallen, zur Herstellung von Polyamiden durch direkte Umsetzung mit Aminonitrilen.

2. Verfahren zur Herstellung von Polyamiden durch Umsetzung mindestens eines Aminonitrils mit wäßrigen Monomer- und Oligomer-Extrakten, die bei der Herstellung von Polyamiden während der Extraktion des Polymeriats mit Wasser anfallen.

3. Verfahren zur Herstellung eines Polyamids durch Umsetzung mindestens eines Aminonitrils mit Wasser, das die folgenden Stufen umfaßt:
(1) Umsetzung mindestens eines Aminonitrils mit einem wäßrigen Medium bei einer Temperatur von 90 bis 400°C und einem Druck von 0,1 bis 35 x 10⁶ Pa, wobei ein Umsetzungsgernisch erhalten wird,
(2) weitere Umsetzung des Umsetzungsgemischs bei einer Temperatur von 150 bis 400°C und einem Druck, der niedriger ist als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die ein wäßriges Medium enthält, bei einer Temperatur von 90 bis 370°C, und einem Druck von 0,1 bis 30 x 10⁶ Pa, wobei ein Produktgemisch erhalten wird, wobei in Stufe 1 und/oder 3 als wäßriges Medium wäßrige Monomer- und Oligomer-Extrakte, die bei der Herstellung von Polyamiden bei der Extraktion des Polymerisats mit Wasser anfallen, und sonst Wasser eingesetzt werden.

4. Verfahren nach Anspruch 3, das zusätzlich oder anstelle der Stufe 3 folgende Stufe umfaßt:
(4) Nachkondensation des Produktgemischs bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

5. Verfahren nach einem der Ansprüche 3 oder 4, wobei in Stufe 1 oder in Stufe 3 oder sowohl in Stufe 1 als auch in Stufe 3 Metalloxid-Katalysatoren als Festbett eingesetzt werden.

6. Verfahren nach Anspruch 4, **dadurch gekennzeichnet, daß** Titandioxid als Katalysator eingesetzt wird.

7. Verfahren nach einem der Ansprüche 3 bis 6, wobei in Stufe 3 die gasförmige oder flüssige Phase, die das wäßrige Medium enthält, in einer Menge von 50 bis 1500 ml Wasser pro 1 kg erste flüssige oder erste feste Phase oder Gemisch aus erster flüssiger und erster fester Phase zugesetzt wird.

8. Verfahren nach einem der Ansprüche 3 bis 7, wobei die Stufen 1 bis 3, 1, 2 und 4 oder 1 bis 4 kontinuierlich durchgeführt werden.

9. Verfahren nach einem der Ansprüche 3 bis 8, wobei mindestens eine der in den jeweiligen Stufen erhaltenen Gasphasen in mindestens eine der vorhergehenden Stufen zurückgeführt wird.

10. Verfahren nach einem der Ansprüche 3 bis 9, wobei als Aminonitril ein ω-Aminoalkylnitril mit einem Alkylenrest (-CH₂-) von 4 bis 12 C-Atomen oder ein Aminoalkylarylnitril mit 8 bis 13 C-Atomen umgesetzt wird.

11. Verfahren nach einem der Ansprüche 3 bis 10, wobei folgendes Gemisch eingesetzt wird:
| | |
|---|---|
| von 50 bis 99,99 Gew.-% | 6-Aminocapronitil, |
| von 0,01 bis 50 Gew.-% | mindestens einer Dicarbonsäure, ausgewählt aus der Gruppe bestehend aus aliphatischen C₄-C₁₀-α, ω-Dicarbonsäuren, aromatischen C₈-C₁₂-Dicarbonsäuren und C₅-C₈-Cycloalkandicarbonsäuren, |
| von 0 bis 50 Gew.-% | eines α, ω-Diamins mit 4 - 10 Kohlenstoffatomen, |
| von 0 bis 50 Gew.-% | eines α, ω-C₂-C₁₂-Dinitrils sowie |
| von 0 bis 50 Gew.-% | einer α, ω-C₅-C₁₂-Aminosäure oder des entsprechenden Lactams, |
| von 0 bis 10 Gew.-% | mindestens einer anorganischen Säure oder deren Salz, |
wobei die Summe der einzelnen Gew.-%-Angaben 100 % beträgt.

## Claims

1. The use of aqueous monomer and oligomer extracts obtained from polyamide production by extraction of the polymer with water for producing polyamides by direct reaction with aminonitriles.

2. A process for producing polyamides by reacting at least one aminonitrile with aqueous monomer and oligomer extracts obtained from polyamide production by extraction of the polymer with water.

3. A process for producing a polyamide by reaction of at least one aminonitrile with water, which comprises:
(1) reacting at least one aminonitrile with an aqueous medium at a temperature from 90 to 400°C and a pressure from 0.1 to 35 × 10⁶ Pa to obtain a reaction mixture,
(2) further reacting the reaction mixture at a temperature from 150 to 400C° and a pressure which is lower than the pressure in step 1, the temperature and the pressure being selected so as to obtain a first gas phase and a first liquid or a first solid phase or a mixture of first solid and first liquid phase, and separating the first gas phase from the first liquid or the first solid phase or from the mixture of first liquid and first solid phase, and
(3) admixing the first liquid or the first solid phase or the mixture of first liquid and first solid phase with a gaseous or liquid phase comprising an aqueous medium at a temperature from 90 to 370°C and a pressure from 0.1 to 30 × 10⁶ Pa to obtain a product mixture, the aqueous medium used in step 1 and/or 3 being aqueous monomer and oligomer extracts obtained from polyamide production by extraction of the polymer with water, and otherwise water.

4. A process as claimed in claim 3, comprising, additionally or instead of step 3, the following step:
(4) postcondensing the product mixture at a temperature from 200 to 350°C and a pressure which is lower than the pressure of step 3, the temperature and pressure being selected so as to obtain a second, water- and ammonia-comprising gas phase and a second liquid or second solid phase or a mixture of second liquid and second solid phase, which each comprise the polyamide.

5. A process as claimed in either of claims 3 and 4, wherein metal oxide catalysts are used in the form of a fixed bed in step 1 or in step 3 or in both step 1 and step 3.

6. A process as claimed in claim 4, wherein titanium dioxide is used as catalyst.

7. A process as claimed in any of claims 3 to 6, wherein, in step 3, the gaseous or liquid phase comprising the aqueous medium is added in an amount from 50 to 1500 ml of water per 1 kg of first liquid or first solid phase or mixture of first liquid and first solid phase.

8. A process as claimed in any of claims 3 to 7, wherein steps 1 to 3, 1, 2 and 4 or 1 to 4 are carried out continuously.

9. A process as claimed in any of claims 3 to 8, wherein at least one of the gas phases obtained in the respective stages is recycled into at least one of the preceding steps.

10. A process as claimed in any of claims 3 to 9, wherein the aminonitrile used is an ω-aminoalkyl nitrile having an alkylene moiety (-CH₂-) of from 4 to 12 carbon atoms or an aminoalkylaryl nitrile having 8 to 13 carbon atoms.

11. A process as claimed in any of claims 3 to 10, wherein the following mixture is used:
| | |
|---|---|
| from 50 to 99.99% by weight | of 6-aminocapronitrile, |
| from 0.01 to 50% by weight | of at least one dicarboxylic acid selected from the group consisting of aliphatic C₄-C₁₀-α,ω-dicarboxylic acids, aromatic C₈-C₁₂-dicarboxylic acids and C₅-C₈-cycloalkane-dicarboxylic acids, |
| from 0 to 50% by weight | of an α,ω-diamine having 4-10 carbon atoms, |
| from 0 to 50% by weight | of an α,ω-C₂-C₁₂-dinitrile, and |
| from 0 to 50% by weight | of an α,ω-C₅-C₁₂-amino acid or of the corresponding lactam, |
| from 0 to 10% by weight | of at least one inorganic acid or salt thereof, |
| the individual weight percentages adding up to 100%. | |

## Revendications

1. Utilisation d'extraits aqueux de monomères et d'oligomères, qui sont produits lors de la préparation de polyamides pendant l'extraction du polymère avec de l'eau pour la préparation de polyamides par réaction directe avec des aminonitriles.

2. Procédé pour la préparation de polyamides par réaction d'au moins un aminonitrile avec des extraits aqueux de monomères et d'oligomères, qui sont produits lors de la préparation de polyamides pendant l'extraction du polymère avec de l'eau.

3. Procédé pour la préparation d'un polyamide par réaction d'au moins un aminonitrile avec de l'eau, qui comprend les étapes suivantes :
(1) réaction d'au moins un aminonitrile avec un milieu aqueux à une température de 90 à 400°C et une pression de 0,1 à 35x10⁶ Pa, un mélange réactionnel étant obtenu,
(2) réaction ultérieure du mélange réactionnel à une température de 150 à 400°C et à une pression inférieure à la pression dans l'étape 1, la température et la pression étant choisies de manière à obtenir une première phase gazeuse et une première phase liquide ou une première phase solide ou un mélange d'une première phase solide et d'une première phase liquide et, et la première phase gazeuse étant séparée de la première phase liquide ou de la première phase solide ou du mélange de la première phase liquide et de la première phase solide et
(3) mélange de la première phase liquide ou de la première phase solide ou du mélange de la première phase liquide et de la première phase solide avec une phase gazeuse ou liquide qui contient un milieu aqueux à une température de 90 à 370°C et une pression de 0,1 à 30x10⁶ Pa, un mélange de produits étant obtenu, en utilisant à l'étape 1 et/ou 3 comme milieu aqueux des extraits aqueux de monomères et d'oligomères, qui sont produits lors de la préparation de polyamides lors de l'extraction du polymère avec de l'eau, et pour le reste de l'eau.

4. Procédé selon la revendication 3, qui comprend en outre ou au lieu de l'étape 3 l'étape suivante :
(4) post-condensation du mélange de produits à une température de 200 à 350°C et une pression qui est inférieure à la pression de l'étape 3, la température et la pression étant choisies de manière à obtenir une deuxième phase gazeuse contenant de l'eau et de l'ammoniac et une deuxième phase liquide ou une deuxième phase solide ou un mélange d'une deuxième phase liquide et d'une deuxième phase solide qui contient à chaque fois le polyamide.

5. Procédé selon l'une quelconque des revendications 3 ou 4, dans lequel on utilise à l'étape 1 ou à l'étape 3, ou tant à l'étape 1 qu'à l'étape 3 des catalyseurs d'oxyde de métal comme lit fixe.

6. Procédé selon la revendication 4, **caractérisé en ce qu'**on utilise du dioxyde de titane comme catalyseur.

7. Procédé selon l'une quelconque des revendications 3 à 6, dans lequel on ajoute dans l'étape 3 la phase gazeuse ou liquide, qui contient le milieu aqueux, en une quantité de 50 à 1500 ml d'eau par kg de la première phase liquide ou de la première phase solide ou de mélange de la première phase liquide et de la première phase solide.

8. Procédé selon l'une quelconque des revendications 3 à 7, dans lequel les étapes 1 à 3, 1, 2 et 4 ou 1 à 4 sont réalisées en continu.

9. Procédé selon l'une quelconque des revendications 3 à 8, dans lequel au moins l'une des phases gazeuses obtenues dans les différentes étapes est recyclée dans au moins l'une des étapes précédentes.

10. Procédé selon l'une quelconque des revendications 3 à 9, dans lequel on fait réagir comme aminonitrile un ω-aminoalkylnitrile présentant un radical alkylène (-CH₂-) de 4 à 12 atomes de carbone ou un aminoalkylarylnitrile comprenant 8 à 13 atomes de carbone.

11. Procédé selon l'une quelconque des revendications 3 à 10, dans lequel on utilise le mélange suivant :
| | |
|---|---|
| de 50 à 99,99% en poids | de 6-aminocapronitrile |
| de 0,01 à 50% en poids | d'au moins un acide dicarboxylique, choisi parmi le groupe constitué des acides α,ω-dicarboxyliques en C₄ à C₁₀, des acides dicarboxyliques aromatiques en C₈ à C₁₂ et des acides (cycloalcane en C5 à C₈)dicarboxyliques, |
| de 0 à 50% en poids | d'une α,ω-diamine comprenant 4 à 10 atomes de carbone |
| de 0 à 50% en poids | d'un α,ω-dinitrile en C₂ à C₁₂, ainsi que |
| de 0 à 50% en poids | d'un acide α,ω-aminé en C₅ à C₁₂ ou du lactame correspondant, |
| de 0 à 10% en poids | d'au moins un acide inorganique ou de son sel |
la somme des différentes indications en % en poids étant égale à 100%.
